# EUROPÄISCHE PATENTSCHRIFT

(11) **EP 4 520 987 B1**
(45) Veröffentlichungstag und Bekanntmachung des Hinweises auf die Patenterteilung: **28.01.2026**
(21) Anmeldenummer: 24196678.7
(22) Anmeldetag: 27.08.2024
(51) Int. Cl.: F16C 32/04, F04D 13/06, H02K 7/09, F04D 1/00, F04D 29/048, H02K 1/18, H02K 11/215, H02K 1/14, H02K 7/14

(54) **MAGNETLAGERVORRICHTUNG UND ZENTRIFUGALPUMPE**
MAGNETIC BEARING DEVICE AND CENTRIFUGAL PUMP
DISPOSITIF DE PALIER MAGNÉTIQUE ET POMPE CENTRIFUGE

(30) Priorität: 11.09.2023 EP 23196487
(43) Veröffentlichungstag der Anmeldung: 12.03.2025
(73) Patentinhaber: Levitronix GmbH, 8048 Zürich (CH)
(72) Erfinder: Stettler, Marcel, 4800 Zofingen (CH)
(74) Vertreter: IPS Irsch AG

(56) Entgegenhaltungen:
- EP-A1- 4 084 304
- WO-A1-2019/125718
- US-A1- 2003 033 859
- US-A1- 2012 156 071

## Beschreibung

Die Erfindung betrifft einen Magnetlagervorrichtung gemäss dem Oberbegriff des unabhängigen Patentanspruchs und eine Zentrifugalpumpe mit einer solchen Magnetlagervorrichtung.

Magnetlagervorrichtungen zur berührungslos magnetischen Lagerung eines Rotors, haben den Vorteil, dass sie ohne mechanische Lager für den Rotor auskommen. Der Rotor wird mittels magnetischer Kräfte gelagert bzw. stabilisiert, die von einem Stator der Magnetlagervorrichtung generiert werden. Aufgrund der Abwesenheit von mechanischen Lagern eignen sich solche Magnetlagervorrichtungen insbesondere für Pump-, Misch- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry, Schwefel-, Phosphorsäure oder andere Chemikalien in der Halbleiterindustrie.

Eine vorteilhafte und an sich bekannte Ausführungsform einer Magnetlagervorrichtung ist die Ausführung in Tempelbauweise, auf die sich auch die vorliegende Erfindung bezieht. "Eine solche Vorrichtung ist aus EP 4 084 304 A1 bekannt.

Das Charakteristische der Tempelbauweise ist es, dass der Stator der Magnetlagervorrichtung eine Mehrzahl von Spulenkernen aufweist, von denen jeder einen Längsschenkel umfasst, der sich von einem ersten Ende in einer axialen Richtung bis zu einem zweiten Ende erstreckt. Mit der axialen Richtung ist dabei diejenige Richtung gemeint, welche durch die Solldrehachse des Rotors definiert ist, welcher mit der Magnetlagervorrichtung gelagert wird. Die Solldrehachse ist diejenige Drehachse, um welche der Rotor im Betriebszustand rotiert, wenn er bezüglich des Stators in einer zentrierten und unverkippten Position ist. Jeder Spulenkern umfasst zusätzlich zu dem Längsschenkel einen Querschenkel, welcher jeweils an dem zweiten Ende des Längsschenkels angeordnet ist, und welcher sich in radialer Richtung - üblicherweise nach innen - erstreckt, wobei die radiale Richtung senkrecht zur axialen Richtung ist. Der Querschenkel erstreckt ich also im Wesentlichen rechtwinklig zum Längsschenkel. Die Spulenkerne haben jeweils die Form eines L, wobei die Querschenkel die kurzen Schenkel des L bilden. Der zu lagernde Rotor ist dann zwischen den Querschenkeln angeordnet.

Die Mehrzahl der Längsschenkel, die sich in axialer Richtung erstrecken und an die Säulen eines Tempels erinnern, hat dieser Bauweise ihren Namen gegeben.

In einer Ausführungsform hat der Stator der Magnetlagervorrichtung beispielsweise sechs Spulenkerne, die kreisförmig und äquidistant um eine becherförmige Ausnehmung herum angeordnet sind, in welche der Rotor eingesetzt werden kann. Die ersten Enden der Längsschenkel sind üblicherweise in Umfangsichtung durch einen Rückschluss verbunden, welcher der magnetischen Flussführung dient. Der zu lagernde Rotor umfasst einen magnetisch wirksamen Kern, beispielsweise eine permanentmagnetische Scheibe oder einen permanentmagnetischen Ring, der zwischen den radial innenliegenden Enden der Querschenkel angeordnet ist und im Betriebszustand um die axiale Richtung rotiert, wobei der Rotor berührungslos magnetisch bezüglich des Stators gelagert ist.

Für solche Magnetlagervorrichtungen ist es nicht notwendiger Weise so, dass der magnetisch wirksame Kern des Rotors permanentmagnetisch ausgestaltet sein muss. Es sind auch solche Ausgestaltungen bekannt, bei denen der magnetisch wirksame Kern des Rotors permanentmagnetfrei, also ohne Permanentmagnete ausgestaltet ist. Der magnetisch wirksame Kern des Rotors ist dann beispielsweise ferromagnetisch ausgestaltet und besteht beispielsweise aus Eisen, Nickel-Eisen, Kobalt-Eisen, Silizium-Eisen, Mu-Metall oder einem anderen ferromagnetischen Werkstoff.

Ferner sind Ausgestaltungen möglich, bei denen der magnetisch wirksame Kern des Rotors sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Um die für die berührungslos magnetische Lagerung des Rotors notwendigen elektromagnetischen Drehfelder zu erzeugen, tragen die Längsschenkel Wicklungen. Die Wicklungen sind beispielsweise so ausgestaltet, dass um jeden Längsschenkel herum eine konzentrierte Wicklung gewickelt ist, das heisst, die Spulenachse jeder konzentrierten Wicklung erstreckt sich jeweils in axialer Richtung. Dabei ist es typisch für die Tempelbauweise, dass die Spulenachsen der konzentrierten Wicklungen in der axialen Richtung verlaufen und, dass die konzentrierten Wicklungen nicht in der radialen Ebene angeordnet sind, in welcher der Rotor bzw. der magnetisch wirksame Kern des Rotors im Betriebszustand gelagert wird.

Es sind Ausgestaltungen möglich, bei denen auf jedem Längsschenkel genau eine konzentrierte Wicklung angeordnet ist. In anderen Ausgestaltungen sind auf jedem Längsschenkel mehrere, beispielsweise genau zwei konzentrierte Wicklungen vorgesehen. Auch sind Ausgestaltungen möglich, bei denen Wicklungen vorgesehen sind, die um zwei in Umfangsrichtung benachbarte Längsschenkel herum gewickelt sind, sodass sich diese beiden benachbarten Längsschenkel beide im Innenraum der konzentrierten Wicklung befinden.

Bei bekannten Magnetlagervorrichtungen in Tempelbauweise ist der Zusammenbau der Magnetlagervorrichtung oft mit einem relativ hohen Aufwand verbunden, weil die einzelnen Komponenten des Stators mit hoher Genauigkeit relativ zueinander positioniert werden müssen, bevor sie fixiert werden können - beispielsweise mit Hilfe einer Vergussmasse, mit welcher das Statorgehäuse komplett gefüllt wird.

Ausgehend von diesem Stand der Technik ist es daher eine Aufgabe der Erfindung, eine Magnetlagervorrichtung zur berührungslos magnetischen Lagerung eines Rotors mit einem ring- oder scheibenförmigen magnetisch wirksamen Kern vorzuschlagen, die einen besonders einfachen Zusammenbau des Stators der Magnetlagervorrichtung ermöglicht. Ferner ist es eine Aufgabe der Erfindung, eine Zentrifugalpumpe mit einer solchen Magnetlagervorrichtung vorzuschlagen.

Der diese Aufgabe lösende Gegenstand der Erfindung ist durch die Merkmale des unabhängigen Patentanspruchs gekennzeichnet.

Erfindungsgemäss wird also ein Magnetlagervorrichtung vorgeschlagen zur berührungslos magnetischen Lagerung eines Rotors, der einen scheibenförmigen oder ringförmigen magnetisch wirksamen Kern umfasst, wobei die Magnetlagervorrichtung einen Stator aufweist, welcher eine Mehrzahl von Spulenkernen umfasst, von denen jeder einen Längsschenkel umfasst, welcher sich von einem ersten Ende in einer axialen Richtung bis zu einem zweiten Ende erstreckt, sowie einen Querschenkel, welcher an dem zweiten Ende des Längsschenkels angeordnet ist und sich in einer radialen Richtung erstreckt, die senkrecht zur axialen Richtung ist, wobei an jedem Längsschenkel mindestens eine konzentrierte Wicklung vorgesehen ist, welche den jeweiligen Längsschenkel umgibt, wobei der Stator ferner eine becherförmige Ausnehmung aufweist, in welche der Rotor einsetzbar ist, wobei die becherförmige Ausnehmung an einem axialen Ende des Stators angeordnet ist, und wobei die Querschenkel um die becherförmige Ausnehmung herum angeordnet sind. Es sind eine erste Halteeinrichtung und eine zweite Halteeinrichtung vorgesehen, die miteinander verbindbar sind, wobei die erste Halteeinrichtung eine Bodenplatte umfasst, auf der eine Mehrzahl von Halteelementen vorgesehen ist, von denen sich jedes in axialer Richtung erstreckt, und von denen jedes zum Aufnehmen genau eines der Längsschenkel ausgestaltet ist, und wobei die zweite Halteeinrichtung zum Aufnehmen der Querschenkel ausgestaltet ist.

Durch die beiden Halteeinrichtungen ist es in besonders einfacher Weise möglich, den Stator der Magnetlagervorrichtung zusammenzubauen. Die Längsschenkel der Spulenkerne werden in die Halteelemente der ersten Halteeinrichtung hineingeschoben. Anschliessend können die Wicklungen auf den Spulenkernen angeordnet werden, sodass sie die Längsschenkel umgeben. Das zweite Halteelement wird dann auf die Querschenkel der Spulenkerne aufgesetzt und mit dem ersten Halteelement verbunden, beispielsweise mittels Schrauben. Dann kann ein Statorgehäuse, in welchem die Spulenkerne mit den Wicklungen angeordnet sind mit einer thermischen Vergussmasse ausgefüllt werden. Die beiden miteinander verbundenen Halteelemente sorgen dabei dafür, dass die einzelnen Komponenten des Stators relativ zueinander in der korrekten Position sind.

Gemäss einer bevorzugten Ausgestaltung weist der Stator einen Spalttopf auf, welcher ein axiales Ende des Stators bildet, wobei der Spalttopf die becherförmige Ausnehmung aufweist, in welche der Rotor einsetzbar ist. Bei dieser bevorzugten Ausgestaltung ist also ein separater Spalttopf vorgesehen, welcher die becherförmige Ausnehmung aufweist.

Eine alternative Ausgestaltung ist es, dass die becherförmige Ausnehmung nicht durch ein separates Bauteil realisiert wird, sondern beispielsweise beim Auffüllen des Statorgehäuses mit der thermischen Vergussmasse gebildet wird. Dazu wird beispielsweise beim Ausgiessen des Statorgehäuses ein Zylinder, z. B. ein Kunststoffzylinder, als Negativform in den Stator bzw. in das Statorgehäuse eingelegt und so platziert, dass er den Ort belegt, an welchem später die becherförmige Ausnehmung sein soll. Der Zylinder wird dann teilweise von der Vergussmasse umflossen. Nach dem Aushärten der Vergussmasse wird der Zylinder entfernt, wodurch die becherförmige Ausnehmung im Stator entsteht. Bei dieser Ausgestaltung wird also die becherförmige Ausnehmung mit der Vergussmasse gebildet.

Vorzugsweise ist ein ringförmiger Rückschluss zum Führen des magnetischen Flusses vorgesehen, welcher die ersten Enden aller Längsschenkel verbindet, wobei die Bodenplatte der ersten Halteeinrichtung zum Aufnehmen des Rückschlusses ausgestaltet ist. Somit ist der Rückschluss bezüglich der Spulenkerne an der richtigen Position angeordnet.

Gemäss einer bevorzugten Ausgestaltung ist der Rückschluss radial innenliegend an den ersten Enden der Längsschenkel angeordnet.

Im Hinblick auf die Erfassung der Position des zu lagernden Rotors ist es vorteilhaft, wenn bezüglich der axialen Richtung zwischen den Wicklungen und den Querschenkeln eine Platine mit elektronischen Komponenten angeordnet ist, wobei die zweite Halteeinrichtung zum Aufnehmen der Platine ausgestaltet ist. Die elektronischen Komponenten umfassen beispielsweise Hallsensoren oder Wirbelstromsensoren, mit denen im Betriebszustand die Lage des Rotors detektierbar ist. Dadurch, dass die zweite Halteeinrichtung zum Aufnehmen der Platine ausgestaltet ist, kann die Platine in sehr einfacher Weise korrekt positioniert werden.

Vorzugsweise ist die Platine ringförmig ausgestaltet und derart angeordnet, dass die elektronischen Komponenten um die becherförmige Ausnehmung des Spalttopfes herum angeordnet sind. Dadurch lässt sich die Position des Rotors in der becherförmigen Ausnehmung besonders gut und zuverlässig bestimmen.

Insbesondere aus konstruktiven Gründen ist es bevorzugt, dass der Spalttopf die zweite Halteeinrichtung radial aussenliegend umfasst. Dabei ist ein axialer Endbereich der zweiten Halteeinrichtung innerhalb des Spalttopfes angeordnet und wird von diesem in Umfangsrichtung gesehen vollständig umschlossen

Hinsichtlich der ersten Halteeinrichtung ist es bevorzugt, dass jedes Halteelement der ersten Halteeinrichtung bezüglich der radialen Richtung jeweils zwischen einem der Längsschenkel und der auf diesem Längsschenkel angeordneten Wicklung angeordnet ist, und sich bezüglich der axialen Richtung mindestens bis an das Ende aller Wicklungen erstreckt, die auf dem jeweiligen Längsschenkel angeordnet sind. Unabhängig davon, ob auf dem jeweiligen Längsschenkel eine oder mehrere Wicklungen angeordnet sind, erstrecken sich die Halteelemente in axialer Richtung mindestens so weit, wie sich die Wicklungen mit ihrem dem Querschenkel zugewandten Ende erstrecken.

Gemäss einer bevorzugten Ausführungsform umfasst jedes Halteelement eine Mehrzahl von Stäben mit dazwischenliegenden Leerräumen, wobei sich jeder Stab in der axialen Richtung erstreckt.

Dabei ist es bevorzugt, dass die Stäbe der Halteelemente so angeordnet und ausgestaltet sind, dass sie eine Federkraft auf den von dem jeweiligen Halteelement aufgenommenen Längsschenkel ausüben. Auf diese Weise lassen sich die Spulenkerne besonders genau positionieren.

Beispielsweise hat jeder Längsschenkel senkrecht zur axialen Richtung einen rechteckigen Querschnitt, wobei an jeder Ecke des Längsschenkels genau einer der Stäbe angeordnet ist. Dabei haben die Stäbe vorzugsweise jeweils ein gewinkeltes Profil, sodass jeder Stab jeweils eine Ecke des Längsschenkels umgreift.

Vorzugsweise sind die erste Halteeinrichtung oder die zweite Halteeinrichtung aus einem Kunststoff hergestellt. Besonders bevorzugt sind die erste Halteeinrichtung und die zweite Halteeinrichtung jeweils aus einem Kunststoff hergestellt. Beispielsweise sind die erste und die zweite Halteeinrichtung jeweils als Spritzgussteil ausgestaltet, das in einem Spritzgiessverfahren hergestellt wird.

Ferner ist es bevorzugt, dass der Spalttopf aus einem Kunststoff hergestellt ist. Auch der Spalttopf kann als Spritzgussteil ausgestaltet sein.

Vorzugsweise ist eine Kontrolleinheit für die Ansteuerung und die Versorgung der Wicklungen mit elektrischer Energie zur Erzeugung elektromagnetischer Drehfelder vorgesehen.

Gemäss einer besonders bevorzugten Ausführungsform ist der Stator der Magnetlagervorrichtung zur Erzeugung eines Drehmoments ausgestaltet, mit welcher der Rotor berührungslos magnetisch zur Rotation um die axiale Richtung antreibbar ist.

Durch die Erfindung wird ferner eine Zentrifugalpumpe zum Fördern eines Fluids vorgeschlagen, die eine erfindungsgemässe Magnetlagervorrichtung umfasst, sowie einen Rotor mit einem magnetisch wirksamen Kern, wobei der Rotor in die becherförmige Ausnehmung des Spalttopfes einsetzbar ist, und wobei der Rotor als Rotor der Zentrifugalpumpe ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Schnittdarstellung eines Ausführungsbeispiels einer erfindungsgemässen Magnetlagervorrichtung,
- Fig. 2:: eine perspektivische Darstellung des Stators des Ausführungsbeispiels mit Blickrichtung auf den Spalttopf,
- Fig. 3: eine perspektivische Darstellung des Stators des Ausführungsbeispiels mit Blickrichtung auf die Bodenplatte der ersten Halteeinrichtung,
- Fig. 4:: eine perspektivische Explosionsdarstellung des Stators,
- Fig. 5:: eine perspektivische Darstellung eines Spulenkerns,
- Fig. 6:: wie Fig. 5, jedoch für eine Variante des Spulenkerns,
- Fig. 7:: eine perspektivische Darstellung des Rückschlusses,
- Fig. 8:: eine perspektivische Darstellung der zweiten Halteeinrichtung,
- Fig. 9:: eine perspektivische Darstellung eines Ausführungsbeispiels einer Platine mit elektronischen Komponenten,
- Fig. 10:: eine Aufsicht auf die zweite Halteeinrichtung mit der Platine aus Richtung der ersten Enden der Spulenkerne,
- Fig. 11:: eine perspektivische Darstellung der ersten Halteeinrichtung,
- Fig. 12:: eine perspektivische Darstellung der ersten Halteeinrichtung, mit konzentrierten Wicklungen auf den Halteelementen,
- Fig. 13:: eine perspektivische Darstellung des Spalttopfes des Stators,
- Fig. 14:: eine Schnittdarstellung des Spalttopfes aus Fig. 13, und
- Fig. 15:: eine schematische Schnittdarstellung eines Ausführungsbeispiels einer erfindungsgemässen Zentrifugalpumpe in einem Schnitt in axialer Richtung.

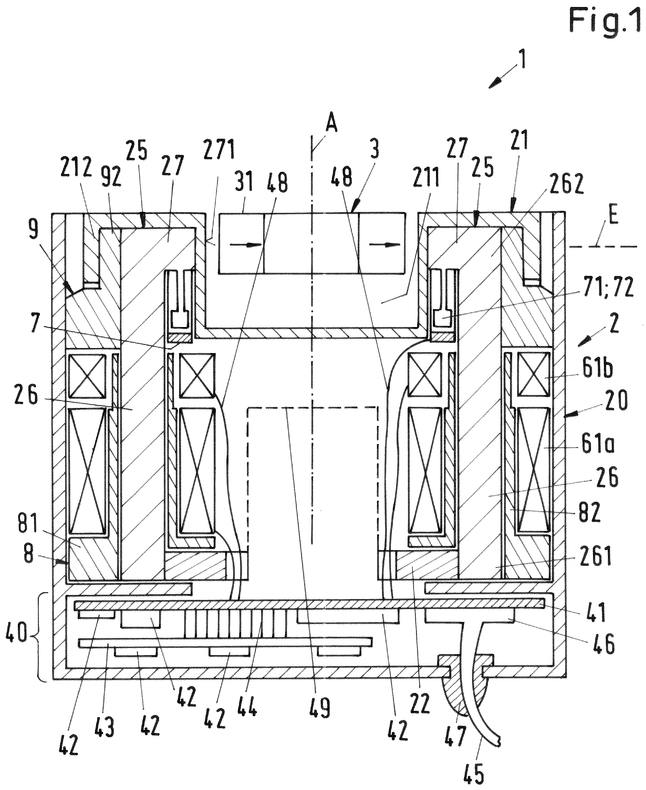

Fig. 1 zeigt eine schematische Schnittdarstellung eines Ausführungsbeispiels einer erfindungsgemässen Magnetlagervorrichtung, die gesamthaft mit dem Bezugszeichen 1 bezeichnet ist. Die Magnetlagervorrichtung 1 ist für die berührungslos magnetische Lagerung eines Rotors 3 ausgestaltet, der einen scheibenförmigen oder ringförmigen magnetisch wirksamen Kern 31 umfasst. Die Magnetlagervorrichtung 1 ist gemäss der Tempelbauweise ausgestaltet und umfasst einen Stator 2, welcher eine Mehrzahl von Spulenkernen 25 - hier sechs Spulenkerne 25 - aufweist, von denen jeder einen Längsschenkel 26 umfasst, welcher sich von einem ersten Ende 261 in einer axialer Richtung A bis zu einem zweiten Ende 262 erstreckt, sowie einen senkrecht zum Längsschenkel 26 angeordneten Querschenkel 27, welcher sich in einer radialen Richtung erstreckt, die senkrecht zu der axialen Richtung A ist. Jeder Querschenkel 27 wird bezüglich der radialen Richtung durch eine Stirnfläche 271 begrenzt, welche den Pol des zugehörigen Spulenkerns 25 bildet.

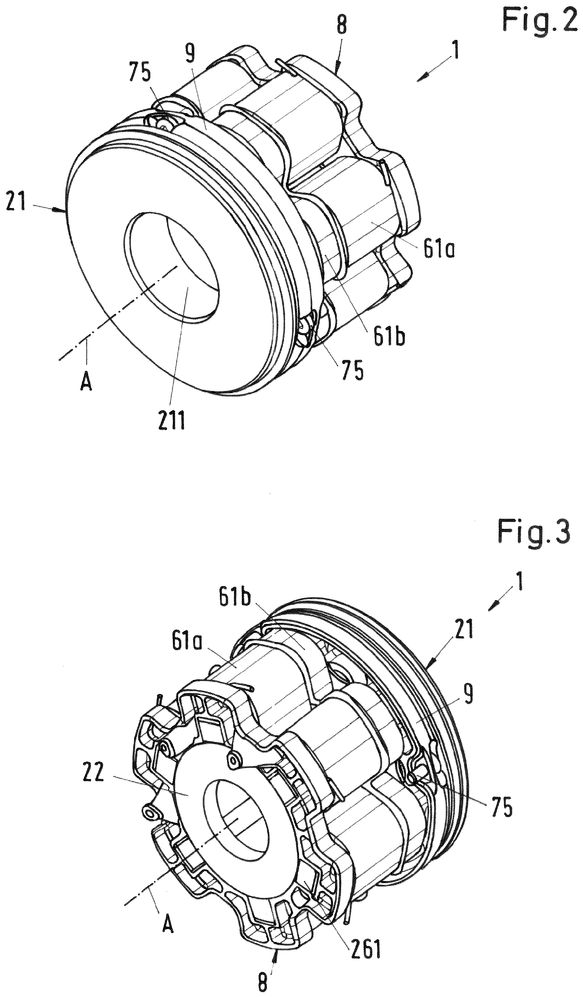

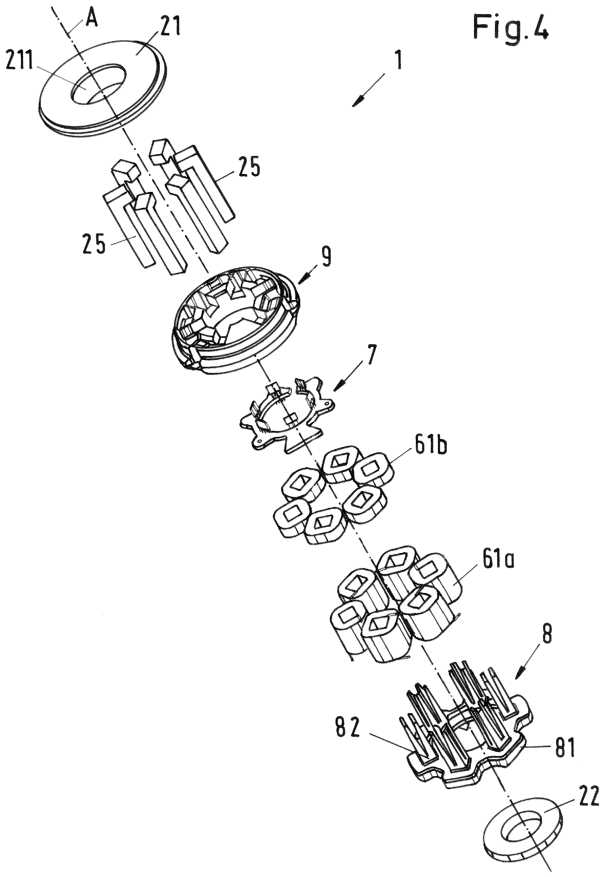

Der Stator 2 umfasst ein Statorgehäuse 20, in welchem die Spulenkerne 25 angeordnet sind. Zum besseren Verständnis zeigen die Fig. 2-4 detailliertere Darstellungen des Stators 2 des Ausführungsbeispiels der Magnetlagervorrichtung 1. Fig. 2 und Fig. 3 zeigen zwei perspektivische Darstellungen des Stators 2, wobei das Statorgehäuse 20 nicht dargestellt ist. Die Blickrichtungen in den Fig. 2 und Fig. 3 unterscheiden sich um etwa 180°, das heisst unter Bezugnahme auf die Darstellung in Fig. 1 schaut man in Fig. 2 schräg von oben auf den Stator 2 und in Fig. 3 schräg von unten auf den Stator 2. Fig. 4 zeigt noch eine perspektivische Explosionsdarstellung des Stators 2. Auch in Fig. 4 ist das Statorgehäuse 20 nicht dargestellt.

Das Statorgehäuse 20 ist vorzugsweise aus einem metallischen Material gefertigt, beispielsweise aus Aluminium oder rostfreiem Stahl. Zur besseren chemischen Resistenz kann das Statorgehäuse 20 mit einer Beschichtung versehen sein, vorzugsweise mit einer Kunststoffbeschichtung aus einem chemisch hoch resistenten Kunststoff. Beispiele für solche Kunststoffe sind PTFE (Polytetrafluorethylen), PFA (Perfluoralkoxy-Polymere), ECTFE (Ethylenchlortrifluorethylen), ETFE (Ethylen-Tetrafluorethylen), Epoxidharz (Polyepoxid), PPA (Polyphthalamid), PE (Polyethylen).

Der Stator 2 umfasst ferner einen Spalttopf 21 mit einer becherförmigen Ausnehmung 211, in welche der zu lagernde Rotor 3 einsetzbar ist (siehe Fig. 1). Der Spalttopf 21 bildet eines der beiden axialen Enden des Stators 2, gemäss der Darstellung in Fig. 1 das obere axiale Ende des Stators 2.

Die Querschenkel 27 der Spulenkerne 25 sind in dem Spalttopf 21 angeordnet, und zwar derart, dass die Stirnflächen 271 der Querschenkel 27 um die becherförmige Ausnehmung 211 herum angeordnet sind.

Der Spalttopf 21 ist fest mit dem Statorgehäuse 20 verbunden, beispielsweise mittels einer formschlüssigen Verbindung (nicht dargestellt) oder mittels einer elastischen Dichtung (nicht dargestellt). Vorzugsweise ist der Spalttopf 21 hermetisch dicht mit dem Statorgehäuse 20 verbunden, sodass das Statorgehäuse 20 zusammen mit dem Spalttopf 21 ein hermetisch dichtes Gehäuse bildet, in welchem die anderen Komponenten des Stators 2 hermetisch dicht gekapselt sind. Das Statorgehäuse 20 ist vorzugsweise mit einer thermisch leitenden Vergussmasse, beispielsweise mit einem Epoxidharz oder mit einem Polyurethan, aufgefüllt, sodass die Komponenten, die im Inneren des Statorgehäuses 20 angeordnet sind, mit der Vergussmasse umgeben sind. Dadurch wird der allgemeine thermische Widerstand reduziert und Vibrationen werden gedämpft.

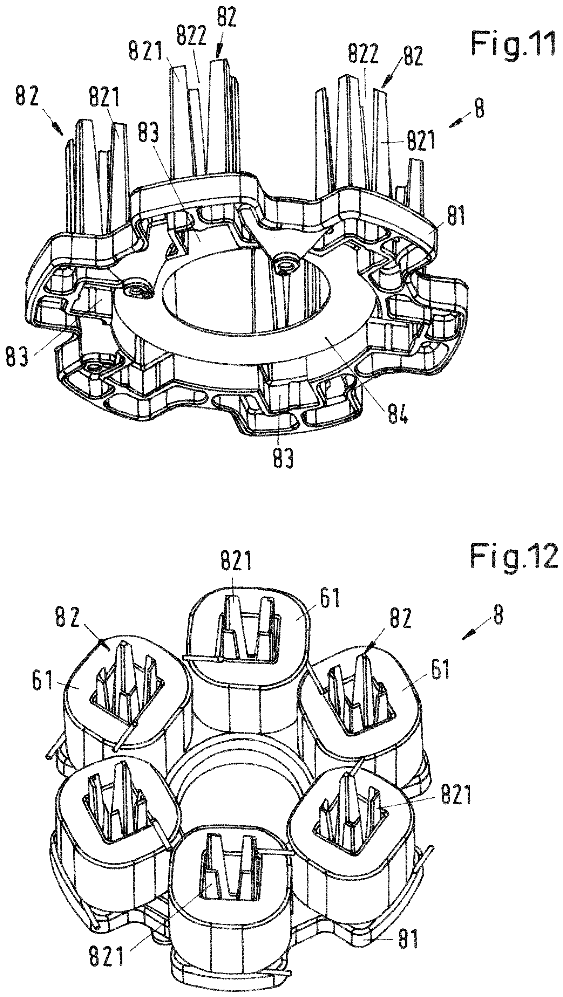

Die Spulenkerne 25 des Stators 2 sind äquidistant auf einer Kreislinie angeordnet, sodass die Stirnflächen 271 den magnetisch wirksamen Kern 31 des Rotors 3 umgeben, wenn der Rotor 3 in die becherförmige Ausnehmung 211 eingesetzt ist. An jedem Längsschenkel 26 sind jeweils genau zwei konzentrierte Wicklungen 61a, 61b vorgesehen, von denen jede den jeweiligen Längsschenkel 26 umgibt, wobei die beiden auf dem gleichen Längsschenkel 26 angeordneten Wicklungen 61a, 61b bezüglich der axialen Richtung A benachbart zueinander angeordnet sind. Bei anderen Ausführungsformen ist an jedem Längsschenkel 26 genau eine konzentrierte Wicklung 61 angeordnet (siehe z.B. Fig. 12), welche den jeweiligen Längsschenkel 26 umgibt.

Die konzentrierten Wicklungen 61a, 61b dienen dazu, elektromagnetische Felder zu erzeugen, mit welchen der Rotor 3 berührungslos magnetisch in der becherförmigen Ausnehmung 211 des Spalttopfs 21 lagerbar ist.

Ferner ist eine Kontrolleinheit 40 für die Ansteuerung und die Versorgung der Wicklungen 61a, 61b mit elektrischer Energie vorgesehen. Die Kontrolleinheit 40 umfasst insbesondere die Leistungselektronik, beispielsweise die Umrichter oder die Gleichrichter, welche die erforderlichen Ströme in die Wicklungen 61a, 61b einspeisen. Die Kontrolleinheit 40 ist nur in Fig. 1 dargestellt. Insbesondere bevorzugt ist die Kontrolleinheit 40 auch innerhalb des Statorgehäuses 20 angeordnet, beispielsweise darstellungsgemäss (Fig. 1) unterhalb der ersten Enden 261 der Längsschenkel 26 der Spulenkerne 25. Die Kontrolleinheit 40 ist vorzugsweise auch mit einer thermischen Vergussmasse umgossen oder an das Statorgehäuse 20 und den Rückschluss 22 und/oder sie Spulenkerne 25 des Stators 2 gekoppelt.

Mit beispielhaftem Charakter sind in Fig. 1 einige Komponenten der Kontrolleinheit 40 dargestellt. Die Kontrolleinheit 40 umfasst beispielsweise ein erstes Elektronikboard 41, auf dem Elektronikkomponenten 42 vorgesehen sind, z. B. die Leistungselektronik für die Ansteuerung der Wicklungen 61a, 61b. Die Kontrolleinheit 40 hat ferner optional ein zweites Elektronikboard 43 mit elektronischen Komponenten 42. Das zweite Elektronikboard 43 kann beispielsweise Auswerteelektronik zur Auswertung der Signale von Sensoren, z.B. Flusssensoren, enthalten und/oder als Kommunikationsinterface dienen. Die Elektronikboards 41, 43 können über eine Verbindung 44 miteinander verbunden sein. Die Verbindung 44 kann als Steckverbindung ausgestaltet sein oder als Flachbandkabel oder als Stiftleiste oder als Flexprint, um nur ein paar Beispiele zu nennen. Ferner ist ein Anschlusskabel 45 vorgesehen, das über einen Kabelanschluss 46 oder einen Stecker mit dem ersten Elektronikboard 41 verbunden ist. Das Anschlusskabel 45 führt aus dem Statorgehäuse 20 heraus und dient beispielsweise der Energieversorgung der Magnetlagervorrichtung 1. Das Anschlusskabel 45 wird mittels einer dichtend ausgestalteten Kabeldurchführung 47 aus dem Statorgehäuse 20 herausgeführt. Vorzugsweise ist die Kabeldurchführung hermetisch dichtend ausgestaltet.

Das erste Elektronikboard 41 ist über Verbindungsleitungen 48, beispielsweise Kabel, mit den Wicklungen 61a, 61b verbunden, um diese anzusteuern und mit Energie zu versorgen. Von den Verbindungsleitungen sind nur ein paar mit beispielhaftem Charakter dargestellt.

Der in Fig. 1 angedeutete Raum mit dem Bezugszeichen 49, der sich innerhalb des von den Längsschenkeln 26 umgeben Innenraums befindet, kann für weitere elektronische Komponenten, Elektronikboards oder Stecker oder Verbindungen genutzt werden. Diese sind in Fig. 1 aus Gründen der besseren Übersicht nicht dargestellt.

Gemäss einer speziell bevorzugten Ausgestaltung ist der Stator 2 so ausgestaltet, dass er zusätzlich zur berührungslos magnetischen Lagerung des Rotors 3 auch ein Drehmoment auf den Rotor 3 bzw. den magnetisch wirksamen Kern 31 des Rotors 3 ausüben kann, welches den Rotor 3 zu einer Rotation um eine Solldrehachse antreibt. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet, so wie dies in Fig. 1 dargestellt ist. Diese Solldrehachse erstreckt sich in der axialen Richtung A, das heisst, bei dieser bevorzugten Ausgestaltung ist der in dem Spalttopf 21 des Stators 2 angeordnete Rotor zur Rotation um die axiale Richtung A antreibbar. Üblicherweise stimmt die Solldrehachse mit der Mittelachse des Stators 2 überein, welche sich in der axialen Richtung A erstreckt

Bei dieser Ausgestaltung erzeugen die konzentrierten Wicklungen 61a, 61b also elektromagnetische Drehfelder, mit denen der Rotor 3 sowohl berührungslos magnetisch bezüglich des Stators 2 lagerbar ist, als auch berührungslos zur Rotation um die axiale Richtung A antreibbar ist.

Es versteht sich, dass die Anzahl von sechs Spulenkernen 25 nur beispielhaft zu verstehen ist. Es sind natürlich auch solche Ausgestaltungen möglich, bei denen der Stator 2 weniger als sechs, z. B. fünf oder vier oder drei Spulenkerne 25 aufweist, oder solche Ausgestaltungen, bei denen der Stator 2 mehr als sechs, z. B. sieben oder acht oder neun Spulenkerne 25 aufweist oder eine beliebige grössere Anzahl von Spulenkernen 25.

Der Rotor 3 umfasst den magnetisch wirksamen Kern 31, welcher ring- oder scheibenförmig ausgestaltet ist. Der magnetisch wirksame Kern 31 ist gemäss der Darstellung in Fig. 1 als Ring ausgestaltet und definiert eine magnetische Mittelebene. Alternativ kann der magnetisch wirksame Kern 31 auch als Scheibe ausgestaltet sein. In der Regel ist bei einem scheibenförmigen oder ringförmigen magnetisch wirksamen Kern 31 die magnetische Mittelebene die geometrische Mittelebene des magnetisch wirksamen Kerns 31 des Rotors 3, die senkrecht zur axialen Richtung A liegt. Im Betriebszustand ist der magnetisch wirksame Kern 31 in einer radialen Ebene E gelagert, welche senkrecht auf der axialen Richtung A steht. Die radiale Ebene ist in Fig. 1 durch die Linie E angedeutet, die senkrecht auf der axialen Richtung A steht. Die radiale Ebene E ist also diejenige Ebene, welche senkrecht auf der axialen Richtung A steht und die Linie E enthält.

Die radiale Ebene E ist diejenige Ebene, in welcher der magnetisch wirksame Kern 31 des Rotors 3 im Betriebszustand zwischen den Stirnflächen 271 im Stator 2 aktiv magnetisch gelagert ist. Wenn der Rotor 3 nicht verkippt und in axialer Richtung A nicht ausgelenkt ist, liegt die magnetische Mittelebene in der radialen Ebene E. Die radiale Ebene E definiert die x-y-Ebene eines kartesischen Koordinatensystems, dessen z-Achse in axialer Richtung A verläuft.

Mit der radialen Position des magnetisch wirksamen Kerns 31 bzw. des Rotors 3 wird die Lage des Rotors 3 in der radialen Ebene E bezeichnet.

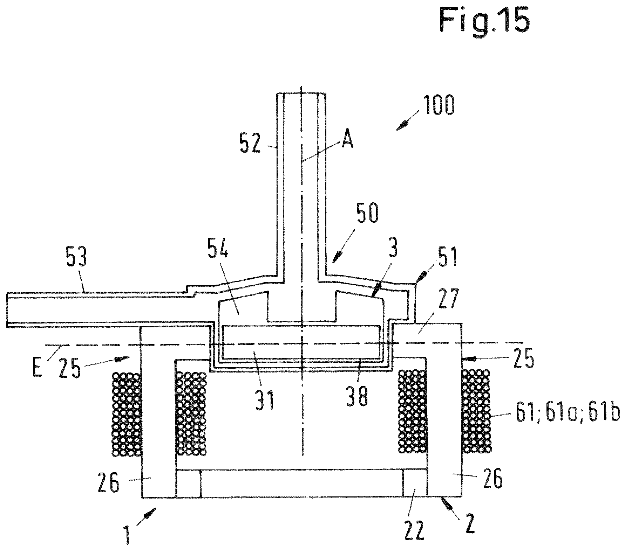

Da es für das Verständnis der Erfindung ausreichend ist, ist in der Zeichnung in der Fig. 1 von dem Rotor 3 nur der magnetisch wirksame Kern 31 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder aus einem Metall oder aus einer Metalllegierung oder aus einer Keramik bzw. einem keramischen Werkstoff. Ferner kann der Rotor 3 auch Flügel zum Mischen, Rühren oder Pumpen von Fluiden (siehe z. B. Fig. 15) oder sonstige Komponenten umfassen.

Wenn der Rotor 3 in die becherförmige Ausnehmung 211 des Spalttopfes 21 eingesetzt ist, wird der Rotor 3 und insbesondere der magnetisch wirksame Kern 31 des Rotors 3 von den radial aussenliegend angeordneten Stirnflächen 271 der Querschenkeln 27 der Spulenkerne 25 des Stators 2 umgeben. Die Querschenkel 27 bilden somit eine Mehrzahl von ausgeprägten Statorpolen- hier sechs Statorpole. Die Querschenkel 27 sind an den oberen Enden der Längsschenkel 26 und in der radialen Ebene E angeordnet. Jeder Querschenkel 27 erstreckt sich in der radialen Richtung auf den Rotor 3 zu.

Wenn sich der magnetisch wirksame Kern 31 des Rotors 3 während des Betriebs in seiner Soll-Position befindet, so ist der magnetisch wirksame Kern 31 zwischen den Stirnflächen 271 der Querschenkel 27 zentriert, sodass die in der radialen Ebene E angeordneten Querschenkel 27 auch in der magnetischen Mittelebene liegen. Die konzentrierten Wicklungen 61a, 61b sind darstellungsgemäss unterhalb der radialen Ebene E angeordnet und so ausgerichtet, dass ihre Spulenachsen in axialer Richtung A verlaufen.

Alle ersten Enden 261 der Längsschenkel 26 - also die darstellungsgemäss (Fig. 1) unteren Enden 261 - sind durch einen Rückschluss 22 miteinander verbunden. Der Rückschluss 22 ist vorzugsweise ringförmig ausgestaltet. Dabei sind solche Ausgestaltungen möglich (siehe z. B. Fig. 1), bei welchen sich der Rückschluss 22 radial innenliegend entlang aller ersten Enden 261 der Längsschenkel 26 erstreckt.

Um die für die magnetische Lagerung des Rotors 3 und optional zur Erzeugung eines Drehmoments auf den Rotor 3 notwendigen elektromagnetischen Drehfelder zu erzeugen, tragen die Längsschenkel 26 der Spulenkerne 25 die als konzentrierte Wicklungen 61a, 61b ausgestalteten Wicklungen, wobei bei dem hier beschriebenen Ausführungsbeispiel um jeden Längsschenkel 26 herum jeweils genau zwei konzentrierte Wicklung 61a, 61b angeordnet sind, die bezüglich der axialen Richtung A benachbart sind. Mit diesen konzentrierten Wicklungen 61a, 61b werden im Betriebszustand diejenigen elektromagnetischen Drehfelder erzeugt, mit welchen eine beliebig einstellbare Querkraft in radialer Richtung auf den Rotor 3 ausübbar ist, sodass die radiale Position des Rotors 3, also seine Position in der zur axialen Richtung A senkrechten radialen Ebene E, aktiv steuerbar bzw. regelbar ist. Optional wird mit diesen elektromagnetischen Drehfeldern zusätzlich ein Drehmoment auf den Rotor 3 bewirkt.

Mit dem "magnetisch wirksamen Kern 31" des Rotors 3 ist derjenige Bereich des Rotors 3 gemeint, welcher für die Erzeugung der magnetischen Lagerkräfte und optional für die Drehmomentbildung magnetisch mit dem Stator 2 zusammenwirkt.

Wie bereits erwähnt, ist der magnetisch wirksame Kern 31 bei diesem Ausführungsbeispiel ringförmig ausgestaltet. Ferner ist der magnetisch wirksame Kern 31 permanentmagnetisch ausgestaltet. Dazu kann der magnetisch wirksame Kern 31 mindestens einen Permanentmagneten, aber auch mehrere Permanentmagnete umfassen oder - wie im hier beschriebenen Ausführungsbeispiel - vollständig aus einem permanentmagnetischen Material bestehen, sodass der magnetisch wirksame Kern 31 der Permanentmagnet ist. Der magnetisch wirksame Kern 31 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der magnetisch wirksame Kern 31 permanentmagnetfrei, also ohne Permanentmagnete ausgestaltet ist. Der Rotor 3 ist dann z.B. als Reluktanzläufer ausgestaltet. Der magnetisch wirksame Kern 31 des Rotors 3 besteht dann beispielsweise aus einem weichmagnetischen Material. Geeignete weichmagnetische Materialien für den magnetisch wirksamen Kern 31 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 31 des Rotors 3 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Auch sind Ausgestaltungen möglich, bei denen der Rotor nach dem Prinzip eines Käfigläufers ausgestaltet ist.

Sowohl der ringförmige Rückschluss 22 als auch die Spulenkerne 25 des Stators 2 sind jeweils aus einem weichmagnetischen Material gefertigt, weil sie als Flussleitelemente zur Führung des magnetischen Flusses dienen.

Geeignete weichmagnetische Materialien für die Spulenkerne 25 und den Rückschluss 22 sind beispielsweise ferromagnetische oder ferrimagnetische Materialien, also insbesondere Eisen, Nickel-Eisen, Kobalt-Eisen Silizium-Eisen oder Mu-Metall. Hierbei ist für den Stator 2 eine Ausgestaltung als Statorblechpaket bevorzugt, bei welcher die Spulenkerne 25 und der Rückschluss 22, geblecht ausgestaltet sind, das heisst sie bestehen aus mehreren dünnen Blechelementen, die gestapelt sind.

Ferner ist es möglich, dass die Spulenkerne 25 und der Rückschluss 22 aus gepressten und anschliessend gesinterten Körnern der genannten Materialien bestehen. Die metallischen Körner sind dabei vorzugsweise in eine Kunststoffmatrix eingebettet, sodass sie zumindest teilweise gegeneinander isoliert sind, wodurch sich Wirbelstromverluste minimieren lassen. Es sind also für den Stator auch weichmagnetische Verbundwerkstoffe geeignet, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Während des Betriebs der Magnetlagervorrichtung 1 wirkt der magnetisch wirksame Kern 31 des Rotors 3 mit dem Stator 2 zusammen, derart, dass der Rotor 3 berührungslos magnetisch bezüglich des Stators 2 lagerbar ist, und vorzugsweise zusätzlich berührungslos magnetisch in Rotation um die axiale Richtung A versetzt werden kann. Dabei ist es besonders vorteilhaft, dass dieselben Wicklungen 61a, 61b, mit denen die magnetische Lagerung des Rotors 3 bewirkt wird, auch zur Erzeugung eines Drehmoments auf den Rotor 3 dienen. Vorzugsweise sind dann drei Freiheitsgrade des Rotors 3, nämlich seine Position in der radialen Ebene E und seine Rotation, aktiv regelbar. Bezüglich seiner axialen Auslenkung aus der radialen Ebene E in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene E ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Spulenkernen 25 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist, bezeichnet auch im Rahmen dieser Anmeldung eine aktive magnetische Lagerung eine solche, die aktiv steuer- bzw. regelbar ist, beispielsweise über die mit den konzentrierten Wicklungen 61a, 61b generierten elektromagnetischen Felder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Soll-Position, also z. B. bei einer Verschiebung oder Auslenkung in axialer Richtung A oder bei einer Verkippung, wieder in seine Soll-Position bringen.

Bei der Magnetlagervorrichtung 1 wird im Unterschied zu klassischen Magnetlagern die magnetische Lagerung - und optional die Generierung eines auf den Rotor wirkenden Drehmoments - über elektromagnetische Drehfelder realisiert. Zur kombinierten Erzeugung der magnetischen Lagerkräfte und eines Drehmoments zum Rotieren des Rotors 3 um die axiale Richtung A ist es einerseits möglich - wie in Fig 1 gezeigt-, zwei unterschiedliche Wicklungssysteme, nämlich die konzentrierten Wicklungen 61a und die konzentrierten Wicklungen 61b zu verwenden, andererseits ist es aber auch möglich, an jedem Längsschenkel 26 nur genau eine konzentrierte Wicklung 61 (siehe z.B. Fig. 12) vorzusehen, die um den jeweiligen Längsschenkel 26 herum gewickelt ist. Dies kann beispielsweise so realisiert werden, dass die z. B. in der Kontrolleinheit 40 jeweils ermittelten Werte für den für die Lagerung benötigten Strom und den für die Erzeugung des Drehmoments benötigten Strom rechnerisch -also z. B. mit Hilfe von Software - addiert bzw. überlagert werden und der sich daraus ergebende Gesamtstrom in die jeweilige konzentrierte Wicklung 61 eingeprägt wird.

Für eine besonders einfache und trotzdem präzise Montage der Magnetlagervorrichtung sind zwei Halteeinrichtungen 8, 9 vorgesehen, nämlich eine erste Halteeinrichtung 8 und eine zweite Halteeinrichtung 9, die miteinander verbindbar sind. Die erste Halteeinrichtung 8 umfasst eine Bodenplatte 81 auf der eine Mehrzahl von Halteelementen 82 vorgesehen ist, die sich jeweils von der Bodenplatte 81 in axialer Richtung A erstrecken. Jedes Halteelement 82 ist derart ausgestaltet, dass es jeweils einen der Längsschenkel 26 der Spulenkerne 25 aufnehmen und diesen führen kann. Vorzugsweise ist jedes Halteelement 82 so ausgestaltet, dass es den von ihm aufgenommenen Längsschenkel 26 eng umschliesst. Somit ist der Längsschenkel 26 durch das Halteelement 82 geführt. In der Bodenplatte 81 sind jeweils fluchtend mit den Halteelementen 82 Öffnungen 83 (Fig. 11) vorgesehen, welche das erste Ende 261 des Längsschenkels 26 aufnimmt, der in das jeweilige Halteelement 82 eingeführt ist. Für jeden Längsschenkel 26 ist genau ein Halteelement 82 vorgesehen, sodass die Anzahl der Halteelemente 82 gleich gross ist wie die Anzahl der Spulenkerne 25.

Bezüglich der axialen Richtung A ist jedes Halteelement 82 kürzer ausgestaltet als der Längsschenkel 26, der in das Halteelement 82 eingeführt ist. Wenn also der Längsschenkel 26 vollständig in das Halteelement 82 eingeführt ist, sodass das erste Ende 261 dieses Längsschenkels 26 in der Öffnung 83 in der Bodenplatte 82 angeordnet ist, so ragt das zweite Ende 262 des Längsschenkels 26 mit dem daran angeordneten Querschenkel 27 über das Halteelement 82 hinaus.

Bezüglich der radialen Richtung ist jedes Halteelement 82 jeweils zwischen einem der Längsschenkel 26 und den auf diesem Längsschenkel 26 angeordneten Wicklungen 61a, 61 b bzw. der auf diesem Längsschenkel 26 angeordneten Wicklung 61 angeordnet. Insbesondere, wenn die Halteelemente 82 - wie dies bevorzugt ist - aus einem Kunststoff bestehen, dienen die Halteelemente 82 einer Isolierung zwischen dem jeweiligen Längsschenkel 26 und der auf diesem Längsschenkel 26 angeordneten Wicklung(en) 61a, 61b; 61. Daher ist es auch bevorzugt, dass sich das jeweilige Halteelement 82 in der axialen Richtung A mindestens bis an dasjenige axiale Ende der Wicklung(en) 61a, 61b; 61 erstreckt, welches benachbart zu dem Querschenkel 27 liegt.

Vorzugsweise ist die Bodenplatte 81 der ersten Halteeinrichtung 8 für die Aufnahme des Rückschlusses 22 ausgestaltet. Dazu umfasst die Bodenplatte 81 der ersten Halteeinrichtung 8 eine ringförmige Ausnehmung 84 (Fig. 11), welche so angeordnet und ausgestaltet ist, dass der Rückschluss 22 in die ringförmige Ausnehmung 84 einsetzbar ist und an allen ersten Enden 261 der Längsschenkel 26 in den Öffnungen 83 der Bodenplatte 82 anliegt.

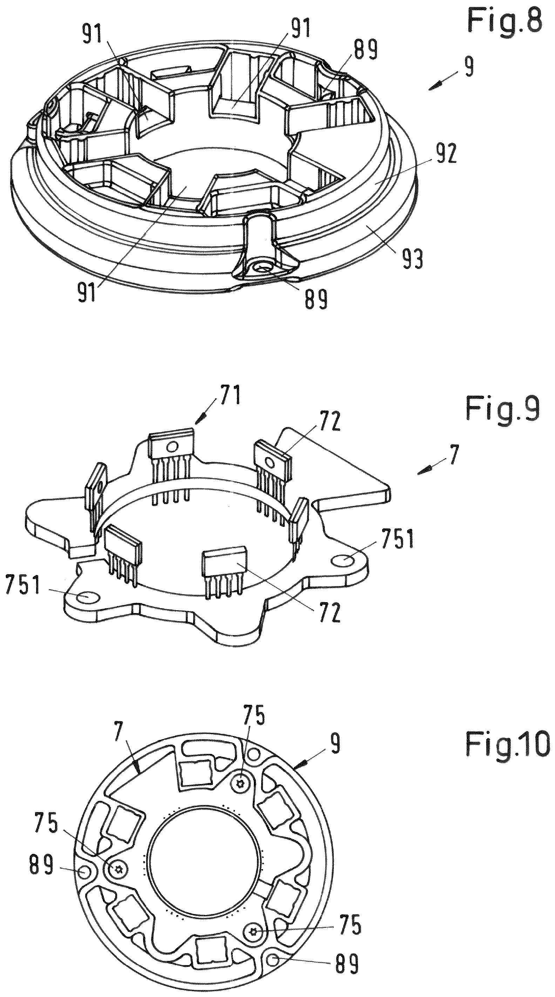

Die zweite Halteeinrichtung 9 ist im Wesentlichen plattenförmig und ringförmig ausgestaltet, und umfasst mehrere Aussparungen 91 (Fig. 8) zum Aufnehmen der Querschenkel 27 der Spulenkerne 25. Für jeden Querschenkel 27 ist genau eine Aussparung 91 vorgesehen, so dass die Anzahl der Aussparungen 91 gleich gross ist wie die Anzahl der Spulenkerne 25. Die zweite Halteeinrichtung 9 wird in den Spalttopf 21 eingesetzt und erstreckt sich vom Boden des Spalttopfes 21 in axialer Richtung A bis zu einem darstellungsgemäss (Fig. 1) unteren Rand, der bezüglich der axialen Richtung A darstellungsgemäss oberhalb der Halteelemente 82 der ersten Halteeinrichtung 8 angeordnet ist. Das heisst, die Halteelemente 82 der ersten Halteeinrichtung 8 und die zweite Halteeinrichtung 9 überlappen nicht bezüglich der axialen Richtung A.

Die zweite Halteeinrichtung 9 ist derart ringförmig ausgestaltet, dass sie um die becherförmige Ausnehmung 211 des Spalttopfes 21 herum angeordnet werden kann, dass also die becherförmige Ausnehmung 211 von der zweiten Halteeinrichtung 9 radial aussenliegend umschlossen wird.

Die Magnetlagervorrichtung 1 umfasst ferne eine Platine 7 mit elektronischen Komponenten 71. Die Platine 7 ist bezüglich der axialen Richtung A zwischen den Wicklungen 61a, 61b einerseits und den Querschenkel 27 andererseits angeordnet. Die zweite Halteeinrichtung 9 ist zum Aufnehmen der Platine 7 ausgestaltet. Vorzugsweise kann die Platine 7 an der zweiten Halteeinrichtung 9 befestigt werden, beispielsweise mittels einer Mehrzahl von Schrauben 75 (siehe z. B. Fig. 2).

Die Platine 7 ist vorzugsweise als Elektronikprint bzw. PCB (printed circuit board) ausgestaltet. Auf der Platine können beispielsweise Sensoren 72 vorgesehen sein, mit welchen die Position des Rotors 3 in der becherförmigen Ausnehmung 211 des Spalttopfs 21 bzw. in der radialen Ebenen E ermittelbar ist. Die Sensoren 72 sind beispielsweise als Hallsensoren oder als Wirbelstromsensoren ausgestaltet. Auf der Platine 7 können ferner solche Komponenten vorgesehen sein, die für die Ansteuerung der Sensoren 72 und/oder für die Auswertung der von den Sensoren 72 ermittelten Messsignale verwendet werden.

Die Platine 7 ist im Wesentlichen ringförmig ausgestaltet und parallel zur radialen Ebene E angeordnet. Vorzugsweise ist die Platine 7 radial innenliegend bezüglich der Längsschenkel 26 der Spulenkerne 25 angeordnet, und zwar derart, dass die elektronischen Komponenten 71, also beispielsweise die Sensoren 72 um die becherförmige Ausnehmung 211 des Spalttopfes 21 herum angeordnet sind.

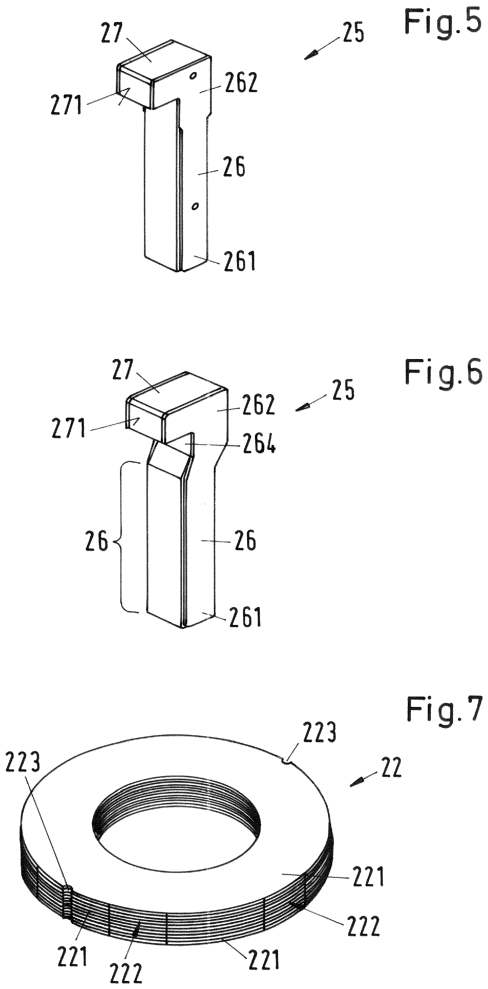

Im Folgenden werden anhand der Fig. 5-14 mögliche Ausführungsformen für verschiedene Komponenten der Magnetlagervorrichtung 1 näher erläutert.

Fig. 5 zeigt eine perspektivische Darstellung eines der Spulenkerne 25 mit dem Längsschenkel 26, der sich von dem ersten Ende 261 bis zu dem zweiten Ende 262 erstreckt, sowie mit dem Querschenkel 27, der am zweiten Ende 262 des Längsschenkels 22 angeordnet ist. Der Spulenkern 25 ist im Wesentlichen L-förmig ausgestaltet, mit dem stabförmigen Längsschenkel 26 und dem dazu rechtwinklig angeordneten Querschenkel 27. Vorzugsweise ist der Spulenkern 26 geblecht ausgestaltet. Bei der geblechten Ausgestaltung ist jeder Spulenkern 25 aus einer Mehrzahl von dünnen Elementen (nicht dargestellt) aufgebaut, die parallel zueinander aufeinander gestapelt sind. Alle Elemente sind identisch ausgestaltet, hier also jeweils L-förmig und auch mit der gleichen Dicke.

Fig. 6 zeigt eine Variante für die Ausgestaltung der Spulenkerne 26. Bei dieser Variante weist der Längsschenkel 26 des Spulenkerns 25 einen ersten Abschnitt 263 und einen zweiten Abschnitt 264 auf, wobei der erste Abschnitt 263 und der zweite Abschnitt 264 bezüglich der axialen Richtung A benachbart zueinander angeordnet sind. Der Querschenkel 27 ist an dem zweiten Abschnitt 264 angeordnet. Der Längsschenkel 26 ist so ausgestaltet, dass die Stirnfläche 271 des Querschenkels 27 von dem ersten Abschnitt 263 des zugehörigen Längsschenkels 26 einen ersten Abstand in radialer Richtung aufweist, und von dem zweiten Abschnitt 264 einen zweiten Abstand in radialer Richtung, wobei der zweite Abstand grösser ist als der erste Abstand. Dies bedeutet, dass der Längsschenkel 26 derart ausgestaltet ist, dass der zweite Abschnitt 264 bezüglich des ersten Abschnitts 263 in radialer Richtung nach aussen verschoben ist, sodass sich der für den Spalttopf 21 und damit für den Rotor 3 zur Verfügung stehende Platz zwischen den Stirnflächen 271 vergrössert, ohne dass dabei die Gefahr eines direkten Übertritts des magnetischen Flusses zwischen dem Längsschenkel 26 und dem magnetisch wirksamen Kern 31 des Rotors 3 besteht. Dadurch, dass der zweiten Abschnitte 264 bezüglich der radialen Richtung und relativ zu dem ersten Abschnitt 263 radial nach aussen versetzt ist, vergrössert sich der Abstand, nämlich der zweite Abstand, zwischen dem Längsschenkel 26 und der Stirnflächen 271 im Bereich der zweiten Abschnitte 264. Dadurch vergrössert sich auch der Abstand zwischen dem magnetisch wirksamen Kern 31 des Rotors 3 und den Längsschenkeln 26 insbesondere im Bereich der zweiten Abschnitte 264.

Durch die Erweiterung des von den Spulenkernen 25 umschlossenen Raums im Bereich der zweiten Abschnitte 264 wird es somit möglich, einen magnetisch wirksamen Kern 31 mit grösserem Durchmesser zu verwenden, ohne dass dafür der diametrale Abstand zwischen zwei Spulenkernen 25 im Bereich der ersten Enden 261, also im Bereich des Rückschlusses 22 vergrössert werden muss.

Fig. 7 zeigt eine perspektivische Darstellung des Rückschlusses 22, der im Wesentlichen ringförmig ausgestaltet ist und der sich vorzugsweise radial innenliegend entlang der ersten Enden 261 der Längsschenkel 26 erstreckt. Vorzugsweise ist der Rückschluss 22 geblecht ausgestaltet. Bei der geblechten Ausgestaltung ist der Rückschluss 22 aus einer Mehrzahl von dünnen Elementen 221 aufgebaut, die parallel zueinander in axialer Richtung A aufeinander gestapelt sind. Alle Elemente 221 sind identisch ausgestaltet, hier also jeweils im Wesentlichen ringförmig und auch mit der gleichen Dicke.

Der Rückschluss 22 weist an seiner radial äusseren Umfangsfläche eine Mehrzahl von Abflachungen 222 auf, die planar, also nicht gekrümmt ausgestaltet sind. An jeder dieser Abflachungen 222 liegt im zusammengesetzten Zustand des Stators 2 jeweils ein erstes Ende 261 eines der Längsschenkel 26 an, die vorzugsweise ein rechteckiges Profil aufweisen. Durch die planare Ausgestaltung der Abflachungen 222 wird eine grosse Kontaktfläche zwischen dem Rückschluss 22 und den Längsschenkeln 26 der Spulenkerne 25 gewährleistet, woraus eine besonders gute Führung des magnetischen Flusses bzw. ein sehr geringer magnetischer Widerstand an dem Übergang zwischen dem Rückschluss 22 und den Längsschenkeln 26 resultiert.

Vorzugsweise ist die Anzahl der Abflachungen 222 gleich gross wie die Anzahl der Spulenkerne 25, hier sind also sechs Abflachungen 222 vorgesehen, die äquidistant entlang des äusseren Umfangs des Rückschlusses 22 verteilt sind

Ferner können an dem Rückschluss 22 ein oder mehrere Entlüftungsbohrungen oder - ausnehmungen 223 vorgesehen sein, die sich bezüglich der axialen Richtung A vollständig durch den Rückschluss 22 hindurch erstrecken. Durch die Entlüftungsausnehmungen 223 kann beispielsweise beim Ausgiessen des Statorgehäuses 20 mit einer thermischen Vergussmasse Luft entweichen.

Fig. 8 zeigt eine perspektivische Darstellung der zweiten Halteeinrichtung 9 mit den sechs Aussparungen 91, welche die Querschenkel 27 der Spulenkerne 25 aufnehmen. Die ringförmig ausgestaltete zweite Halteeinrichtung 9 weist einen axialen Randbereich 92 auf, der einen Aussendurchmesser hat, welcher kleiner ist als der Durchmesser des Rests der zweiten Halteeinrichtung 9. Gemäss der Darstellung in Fig. 8 ist dieser axiale Randbereich 92 der obere axiale Randbereich. Der axiale Randbereich 92 endet bezüglich der axialen Richtung A an einem Vorsprung 93, an welchem sich der Aussendurchmesser der zweiten Halteeinrichtung 9 vergrössert. In diesem Vorsprung 93 sind mehrere -hier drei- Löcher 89 vorgesehen, welche Schrauben (nicht dargestellt) aufnehmen, mit denen die erste Halteeinrichtung 8 und die zweite Halteeinrichtung 9 aneinander befestigt werden können, sodass die beiden Halteeinrichtungen 8, 9 relativ zueinander fixiert sind.

Die zweite Halteeinrichtung 9 ist vorzugsweise aus einem Kunststoff hergestellt und insbesondere bevorzugt aus einem Kunststoff, der mittels Spritzgiessens verarbeitet werden kann. Die zweite Halteeinrichtung 9 ist somit vorzugsweise als ein Spritzgussteil ausgestaltet. Geeignete Kunststoffe für die Herstellung der zweiten Halteeinrichtung 9 sind beispielsweise Acrylnitril-Butadien-Styrol (ABS), Polyamid (Nylon, PA), Polypropylen (PP), oder fasergefülltes Polypropylen.

Die Ausgestaltung mit dem axialen Randbereich 92 kleineren Durchmessers und dem Vorsprung 93 dient dazu, dass der Spalttopf 21 die zweite Halteeinrichtung 9 radial aussenliegend umschliessen kann. Dies ist insbesondere in Fig. 1 zu erkennen. Der Spalttopf 21 hat einen radial aussenliegenden Rand 212, welcher im zusammengebauten Zustand den axialen Randbereich 92 der zweiten Halteeinrichtung 9 umgreift. Dabei ist der radial aussenliegende Rand 212 bezüglich der axialen Richtung A so lang ausgestaltet, dass er sich höchstens bis auf den Vorsprung 93 erstreckt.

Fig. 9 zeigt eine perspektivische Darstellung eines Ausführungsbeispiels der Platine 7 mit den elektronischen Komponenten 71, welche eine Mehrzahl - hier sechs - Sensoren 72 umfassen. Die Sensoren 72 sind beispielsweise Positionssensoren zur Bestimmung der aktuellen Position des Rotors 3 in der becherförmigen Ausnehmung 211 des Spalttopfs 21. Die Sensoren 72 sind beispielsweise als Hallsensoren oder Wirbelstromsensoren ausgestaltet. Auf der Platine 7 können auch noch weitere elektronische Komponenten 71 (nicht näher dargestellt) vorgesehen sein, beispielsweise Komponenten für die Ansteuerung der Sensoren 72 oder für die Verarbeitung von Messsignalen.

Die Platine 7 ist ringförmig ausgestaltet und hat einen Innendurchmesser, der mindestens so gross ist wie der Aussendurchmesser der becherförmigen Ausnehmung 211 im Spalttopf 21, sodass die Platine 7 radial aussenliegend um die becherförmige Ausnehmung 211 herum angeordnet werden kann. Die Sensoren 72 sind in Umfangsrichtung gesehen vorzugsweise äquidistant auf der Platine 7 angeordnet. Die Platine 7 umfasst ferner mehrere - hier drei - Löcher 751 für die Schrauben 75, mit denen die Platine 7 an der zweiten Halteeinrichtung 9 befestigt werden kann.

Fig. 10 zeigt eine Aufsicht auf die zweite Halteeinrichtung 9 mit der Platine 7 aus Richtung der ersten Enden 261 der Spulenkerne 26. Gemäss der Darstellung in Fig. 1 erfolgt die Aufsicht also von unten. Die Platine 7 ist mittels der drei Schrauben 75 fest mit der zweiten Halteeinrichtung 9 verbunden. Die zweite Halteeinrichtung 9 dient somit als Halterung für die Platine 7 mit den darauf angeordneten elektronischen Komponenten 71 bzw. Sensoren 72.

Im zusammengebauten Zustand (siehe Fig. 1) sind somit die Sensoren 72 in dem Spalttopf 21 und um die becherförmige Ausnehmung 211 herum angeordnet, wobei die Sensoren bezüglich der radialen Richtung zwischen den Längsschenkeln 26 und der becherförmigen Ausnehmung 211 angeordnet sind.

Fig. 11 zeigt eine perspektivische Darstellung der ersten Halteeinrichtung 8 in einer Blickrichtung schräg von unten, wobei sich "unten" auf die Darstellung in Fig. 1 bezieht. Fig. 12 zeigt eine perspektivische Darstellung der ersten Halteeinrichtung 8 in einer Blickrichtung schräg von oben, wobei sich "oben" auf die Darstellung in Fig. 1 bezieht. In Fig. 12 sind zusätzlich sechs konzentrierte Wicklungen 61 gezeigt, von denen jede um genau eines der Halteelemente 82 herum angeordnet ist. Bei dieser Variante ist also an jedem Längsschenkel 26 der Spulenkerne 25 jeweils nur eine konzentrierte Wicklung 61 vorgesehen. Selbstverständlich sind auch Ausgestaltungen möglich, bei denen auf jedem Halteelement 8 jeweils genau zwei konzentrierte Wicklungen 61a, 61b vorgesehen sind (siehe z. B. Fig. 4).

Die erste Halteeinrichtung 8 mit der Bodenplatte 81 und der Mehrzahl von Halteelementen 82 ist vorzugsweise einstückig ausgestaltet. Die erste Halteeinrichtung 8 ist vorzugsweise aus einem Kunststoff hergestellt und insbesondere bevorzugt aus einem Kunststoff, der mittels Spritzgiessens verarbeitet werden kann. Die erste Halteeinrichtung 8 ist somit vorzugsweise als ein Spritzgussteil ausgestaltet. Geeignete Kunststoffe für die Herstellung der ersten Halteeinrichtung 8 sind beispielsweise Acrylnitril-Butadien-Styrol (ABS), Polyamid (Nylon, PA), Polypropylen (PP), Polybutylene Terephthalat (PBT), Polyimid (PI), Polysuccinimid (PSI), Polyphthalamid (PPA) oder Polyether Ether Keton (PEEK), wobei den Kunststoffen vorzugsweise Glasfasern, Kohlefasern, Aramidfasern, Keramikfasern oder Fasern aus anderen Materialien zur Verbesserung der mechanischen Eigenschaften beigefügt werden.

Die erste Halteeinrichtung 8 umfasst für jeden Spulenkern 25 jeweils genau ein Halteelement 82. Die Anzahl der Halteelemente ist gleich der Anzahl der Spulenkerne 25. Jedes Halteelement 82 ist vorzugsweise mit mehreren Stäben 821 ausgestaltet, wobei zwischen benachbarten Stäben Leerräume 822 vorgesehen sind. Jeder der Stäbe 821 erstreckt sich jeweils in axialer Richtung A. Die Stäbe 821 eines Halteelements 82 sind so ausgestaltet und angeordnet, dass der von dem Halteelement 82 aufgenommene Längsschenkel 26 sicher geführt und gehalten wird. Vorzugsweise sind die Stäbe 821 so ausgestaltet, dass sie eine Federkraft auf den von dem Halteelement 82 aufgenommenen Längsschenkel 26 ausüben, das heisst beim Einführen des Längsschenkels 26 werden die Stäbe 821 federelastisch deformiert. Dadurch führen die Stäbe 821 den Längsschenkel 26 beim Einschieben des Längsschenkels 26 in das Halteelement 82 zuverlässig, sodass das erste Ende 261 des Längsschenkels 26 in einfacher und zuverlässiger Weise in die Öffnung 83 in der Bodenplatte 81 eingeführt werden kann.

Bei dem hier beschriebenen Ausführungsbeispiel haben die Längsschenkel 26 der Spulenkerne 25 jeweils ein rechteckiges Profil in einem Schnitt senkrecht zur axialen Richtung A. Dann ist vorzugsweise für jede Kante des Längsschenkels 26 ein Stab 821 vorgesehen, welcher an dieser Kante angeordnet ist. Somit umfasst jedes Halteelement 82 genau vier Stäbe 821, welche an den vier Kanten des Längsschenkels 26 angeordnet sind. Besonders bevorzugt ist jeder Stab 821 mit einem gewinkelten Profil in einem Schnitt senkrecht zur axialen Richtung A ausgestaltet, wobei die Kante des Längsschenkels 26 in dem gewinkelten Profil des Stabs 821 anliegt. Diese Ausgestaltung der Stäbe 821 ist am besten in Fig. 12 zu erkennen. Jeder Stab 821 mit dem gewinkelten Profil umgreift also eine der Kanten des Längsschenkels 26. Dadurch ist der Längsschenkel 26 an seinen Kanten sicher geführt, weil jede dieser Kanten von einem der Stäbe 821 mit dem gewinkelten Profil umgriffen wird.

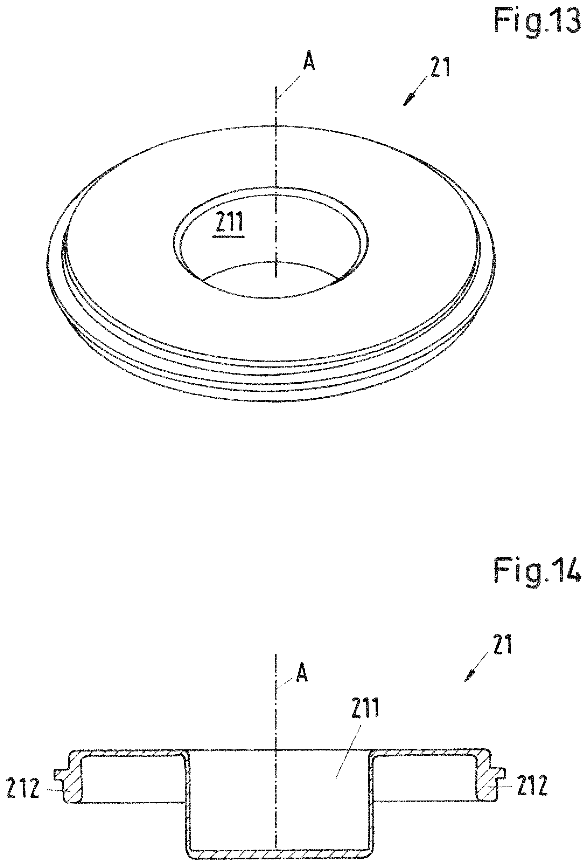

Fig. 13 zeigt in einer perspektivischen Darstellung den Spalttopf 21 des Stators 2 des in Fig. 4 dargestellten Ausführungsbeispiels. Fig. 14 zeigt den Spalttopf 21 in einer Schnittdarstellung, wobei der Schnitt in der axialen Richtung erfolgt.

Der Spalttopf 21 mit der becherförmigen Ausnehmung 211ist vorzugsweise einstückig ausgestaltet. Der Spalttopf ist vorzugsweise aus einem Kunststoff hergestellt und insbesondere bevorzugt aus einem Kunststoff, der mittels Spritzgiessens verarbeitet werden kann. Der Spalttopf ist somit vorzugsweise als ein Spritzgussteil ausgestaltet. Geeignete Kunststoffe für die Herstellung des Spalttopfs 21 sind beispielsweise Acrylnitril-Butadien-Styrol (ABS), Polyamid (Nylon, PA), Polypropylen (PP), Polytetrafluoroethylene (PTFE), Perfluoroalkoxy Alkane (PFA) Polyvinylchlorid (PVC), Polybutylene Terephthalat (PBT), Polyimid (PI), Polyetereterketon , Polysuccinimid (PSI), Polyphthalamid (PPA) oder Polyether Ether Keton (PEEK),

Der Spalttopf 21 umfasst die becherförmige Ausnehmung 211, in welche der Rotor 3 eingesetzt werden kann, und den radial aussenliegenden Rand 212, welcher im zusammengebauten Zustand den axialen Randbereich 92 der zweiten Halteeinrichtung 9 umgreift.

Die Magnetlagervorrichtung 1 kann in sehr einfacher Weise zusammengebaut werden. Der Zusammenbau kann beispielsweise wie folgt durchgeführt werden. Der Rückschluss 22 wird in die ringförmige Ausnehmung 84 in der Bodenplatte 81 des ersten Halteeinrichtung 8 eingesetzt. Die Wicklungen 61a und 61b oder 61 werden auf die Halteelemente 82 aufgesetzt. Die Platine 7 wird mittels der Schrauben 75 an der zweiten Halteeinrichtung 9 fixiert. Die erste Halteeinrichtung 8 und die zweite Halteeinrichtung 9 werden mittels Schrauben (nicht dargestellt) miteinander verbunden. Die Spulenkerne 25 werden durch die zweite Halteeinrichtung 9 hindurch in die Halteelemente 81 der ersten Halteeinrichtung 8 eingeführt, sodass ihre ersten Enden 261 von den Öffnungen 83 in der Bodenplatte 81 der ersten Halteeinrichtung 8 aufgenommen werden. Die Gesamtheit aus den beiden Halteeinrichtungen 8, 9, den Wicklungen 61a, 61b; 61 und den Spulenkernen 25 wird in dem Statorgehäuse 20 platziert.

Alternativ ist es auch möglich, die erste Halteeinrichtung 8 mit dem eingesetzten Rückschluss 22 zunächst in dem Statorgehäuse 20 zu platzieren, dann die Wicklungen 61a, 61b; 61 auf den Halteelementen 81 anzuordnen, die zweite Halteeinrichtung 9 mit der daran fixierten Platine 7 im Statorgehäuse 20 anzuordnen und mit der ersten Halteeinrichtung 8 zu verbinden und dann die Spulenkerne 25 durch die zweite Halteeinrichtung 9 hindurch in die Halteelemente 82 einzuführen.

Wenn die beiden Halteeinrichtungen 8, 9, die Wicklungen 61a, 61b; 61 und die Spulenkerne 25 in dem Statorgehäuse 20 angeordnet sind, wird der Spalttopf 21 auf das Statorgehäuse 20 aufgesetzt und dichtend, vorzugsweise hermetisch dicht, mit dem Statorgehäuse 20 verbunden. Anschliessend kann die Magnetlagervorrichtung mit einer thermisch leitenden Vergussmasse ausgegossen werden, sodass der gesamte von dem Statorgehäuse 20 und dem Spalttopf 21 umschlossene Raum mit dieser Vergussmasse gefüllt ist.

Durch die Erfindung wird ferner eine Zentrifugalpumpe 100 zum Fördern eines Fluids vorgeschlagen, die dadurch gekennzeichnet ist, dass die Zentrifugalpumpe 100 eine Magnetlagervorrichtung 1 und einen Rotor 3 umfasst, wobei die Magnetlagervorrichtung 1 erfindungsgemäss ausgestaltet ist. Dabei ist die Magnetlagervorrichtung 1 derart ausgestaltet, dass sie zusätzlich zur berührungslos magnetischen Lagerung des Rotors 3 ein auf den Rotor 3 wirkendes Drehmoment erzeugen kann, dass dessen Rotation um die axiale Richtung A antreibt.

Fig. 15 zeigt ein Ausführungsbeispiel einer erfindungsgemässen Zentrifugalpumpe, die gesamthaft mit dem Bezugszeichen 100 bezeichnet ist, in einer schematischen Schnittdarstellung in einem Schnitt in axialer Richtung A. In Fig. 15 sind zum besseren Verständnis und aus Gründen der besseren Übersicht das Statorgehäuse 20 und der Spalttopf 21 nicht dargestellt.

Die Zentrifugalpumpe 100 umfasst eine Pumpeneinheit 50 mit einem Pumpengehäuse 51, das einen Einlass 52 und einen Auslass 53 für das zu fördernde Fluid umfasst, wobei der Rotor 3 im Pumpengehäuse 51 angeordnet ist, und eine Mehrzahl von Flügeln 54 zum Fördern des Fluids umfasst. Die Pumpeneinheit 50 ist derart ausgestaltet, dass die Pumpeneinheit 50 so in den Spalttopf 21 des Stators 2 einsetzbar ist, dass der magnetisch wirksame Kern 31 des Rotors 3 von den Stirnflächen 271 der Querschenkel 27 umgeben wird.

Ein vorteilhafter Aspekt ist es, dass der Rotor 3 als Integralrotor ausgestaltet ist, weil er sowohl der Rotor 3 der magnetischen Lagerung ist als auch der Rotor 3 der Zentrifugalpumpe 100, mit welchem das Fluid gefördert wird. Diese Ausgestaltung als Integralrotor bietet den Vorteil einer sehr kompakten und platzsparenden Ausgestaltung.

Der Stator 2 ist in dem Statorgehäuse 20 (in Fig. 15 nicht dargestellt) angeordnet, das vorzugsweise zusammen mit dem Spalttopf 21 als hermetisch dichtes Statorgehäuse 20 ausgestaltet ist. Die in Fig. 1 dargestellte Kontrolleinheit 40 ist vorzugsweise, aber nicht notwendigerweise auch in dem Statorgehäuse 20 angeordnet. Das Statorgehäuse 20 ist vorzugsweise mit einer Vergussmasse, beispielsweise mit einem Epoxidharz oder mit einem Polyurethan, aufgefüllt, sodass alle Komponenten, die im Inneren des Statorgehäuses 20 angeordnet sind, von der Vergussmasse umgeben sind.

Die Pumpeneinheit 50 ist in der becherförmige Ausnehmung 211 des Spalttopfes 21 (in Fig. 15 nicht dargestellt) angeordnet, sodass der in dem Pumpengehäuse 51 vorgesehene Rotor 3 von dieser becherförmigen Ausnehmung 211 umgeben wird, wobei der magnetisch wirksame Kern 31 des Rotors 3 zwischen den Querschenkeln 27 der Spulenkerne 26 angeordnet ist.

Das Pumpengehäuse 51 ist am Statorgehäuse 20 fixiert, vorzugsweise mit einer Mehrzahl von Schrauben (nicht dargestellt).

Der Rotor 3 umfasst die Mehrzahl von Flügeln 54 zum Fördern des Fluids. Bei dem hier beschriebenen Ausführungsbeispiel sind beispielsweise insgesamt vier Flügel 54 vorgesehen, wobei diese Anzahl beispielhaften Charakter hat. Der Rotor 3 umfasst ferner eine Ummantelung 38, mit welcher der magnetisch wirksame Kern 31 des Rotors 3 umschlossen und vorzugsweise hermetisch eingekapselt ist, sodass der magnetisch wirksame Kern 31 des Rotors 3 nicht in Kontakt mit dem zu fördernden Fluid kommt. Alle Flügel 54 sind auf der Ummantelung 38 angeordnet und bezüglich der Umfangsrichtung des Rotors 3 äquidistant angeordnet. Jeder Flügel 54 erstreckt sich in radialer Richtung nach aussen und ist drehfest mit dem Ummantelung 38 verbunden. Die Flügel 54 können separate Komponenten sein, die dann auf der Ummantelung 38 fixiert werden. Es ist natürlich auch möglich, dass alle Flügel 54 integraler Bestandteil der Ummantelung 38 sind, dass also die Ummantelung 38 mit allen Flügeln 54 einstückig ausgestaltet ist. Der Rotor 3 mit den Flügeln 54 bildet das Flügelrad bzw. das Laufrad der Zentrifugalpumpe 100, mit welchem auf das Fluid oder die Fluide eingewirkt wird.

Je nach Anwendungsfall, ist es bevorzugt, wenn das Pumpengehäuse 51 der Pumpeneinheit 50 sowie die Ummantelung 38 und die Flügel 54 aus einem oder mehreren Kunststoffen hergestellt werden. Geeignete Kunststoffe sind: Polyethylene (PE), Low Density Polyethylene (LDPE), Ultra Low Density Polyethylene (ULDPE), Ethylene Vinyl Acetate (EVA), Polyethylene Terephthalate (PET), Polyvinylchlorid (PVC), Polypropylene (PP), Polyurethan (PU), Polyvinylidene Fluoride (PVDF), Acrylonitrile Butadiene Styrene (ABS), Polyacryl, Polycarbonate (PC), Polyetheretherketon (PEEK) oder Silicone. Für viele Anwendungen sind auch die unter dem Markennamen Teflon bekannten Materialien Polytetrafluoroethylene (PTFE) und und Perfluoralkoxy-Polymere (PFA) als Kunststoff geeignet.

Es versteht sich, dass die erfindungsgemässe Magnetlagervorrichtung auch für andere Vorrichtungen als Zentrifugalpumpen geeignet ist, beispielsweise für Mischvorrichtungen zum Mischen fliessfähiger Substanzen, für Rührvorrichtungen, beispielsweise zum Durchmischen eines Fluids in einem Tank, für Lüfter oder auch für Vorrichtungen zum Tragen und Rotieren von Wafern, beispielsweise in der Halbleiterfertigung.

## Patentansprüche

1. Magnetlagervorrichtung zur berührungslos magnetischen Lagerung eines Rotors (3), der einen scheibenförmigen oder ringförmigen magnetisch wirksamen Kern (31) umfasst, wobei die Magnetlagervorrichtung einen Stator (2) aufweist, welcher eine Mehrzahl von Spulenkernen (25) umfasst, von denen jeder einen Längsschenkel (26) umfasst, welcher sich von einem ersten Ende (261) in einer axialen Richtung (A) bis zu einem zweiten Ende (262) erstreckt, sowie einen Querschenkel (27), welcher an dem zweiten Ende (262) des Längsschenkels angeordnet ist, und sich in einer radialen Richtung erstreckt, die senkrecht zur axialen Richtung (A) ist, wobei an jedem Längsschenkel (26) mindestens eine konzentrierte Wicklung (61a, 61b; 61) vorgesehen ist, welche den jeweiligen Längsschenkel (26) umgibt, wobei der Stator (2) ferner eine becherförmige Ausnehmung (211) aufweist, in welche der Rotor (3) einsetzbar ist, wobei die becherförmige Ausnehmung (211) an einem axialen Ende des Stators (2) angeordnet ist, und wobei die Querschenkel (27) um die becherförmige Ausnehmung (211) herum angeordnet sind, **dadurch gekennzeichnet, dass** eine erste Halteeinrichtung (8) und eine zweite Halteeinrichtung (9) vorgesehen sind, die miteinander verbindbar sind, wobei die erste Halteeinrichtung (8) eine Bodenplatte (81) umfasst, auf der eine Mehrzahl von Halteelementen (82) vorgesehen ist, von denen sich jedes in axialer Richtung (A) erstreckt, und von denen jedes zum Aufnehmen genau eines der Längsschenkel (26) ausgestaltet ist, und wobei die zweite Halteeinrichtung (9) zum Aufnehmen der Querschenkel (27) ausgestaltet ist.

2. Magnetlagervorrichtung nach Anspruch 1, wobei der Stator (2) einen Spalttopf (21) aufweist, welcher ein axiales Ende des Stators (2) bildet, und wobei der Spalttopf (21) die becherförmige Ausnehmung (211) aufweist, in welche der Rotor (3) einsetzbar ist.

3. Magnetlagervorrichtung nach einem der vorangehenden Ansprüche mit einem ringförmigen Rückschluss (22) zum Führen des magnetischen Flusses, welcher die ersten Enden (261) aller Längsschenkel (26) verbindet, wobei die Bodenplatte (81) der ersten Halteeinrichtung (8) zum Aufnehmen des Rückschlusses (22) ausgestaltet ist, und wobei der Rückschluss (22) vorzugsweise radial innenliegend an den ersten Enden (261) der Längsschenkel (26) angeordnet ist.

4. Magnetlagervorrichtung nach einem der vorangehenden Ansprüche, bei welchem bezüglich der axialen Richtung (A) zwischen den Wicklungen (61a, 61b; 61) und den Querschenkeln (27) eine Platine (7) mit elektronischen Komponenten (71) angeordnet ist, und wobei die zweite Halteeinrichtung (9) zum Aufnehmen der Platine (7) ausgestaltet ist.

5. Magnetlagervorrichtung nach Anspruch 4, bei welcher die Platine (7) ringförmig ausgestaltet und derart angeordnet ist, dass die elektronischen Komponenten (71) um die becherförmige Ausnehmung (211) herum angeordnet sind.

6. Magnetlagervorrichtung nach einem der Ansprüche 2-5, bei welcher der Spalttopf (21) die zweite Halteeinrichtung (9) radial aussenliegend umfasst.

7. Magnetlagervorrichtung nach einem der vorangehenden Ansprüche, bei welcher jedes Halteelement (82) der ersten Halteeinrichtung (8) bezüglich der radialen Richtung jeweils zwischen einem der Längsschenkel (26) und der auf diesem Längsschenkel (26) angeordneten Wicklung (61a, 61b; 61) angeordnet ist, und sich bezüglich der axialen Richtung (A) mindestens bis an das Ende aller Wicklungen (61a, 61b; 61) erstreckt, die auf dem jeweiligen Längsschenkel (26) angeordnet sind.

8. Magnetlagervorrichtung nach einem der vorangehenden Ansprüche, bei welcher jedes Halteelement (82) eine Mehrzahl von Stäben (821) mit dazwischenliegenden Leerräumen (822) umfasst, wobei sich jeder Stab (821) in der axialen Richtung (A) erstreckt.

9. Magnetlagervorrichtung nach Anspruch 8, bei welcher die Stäbe (821) der Halteelemente (82) so angeordnet und ausgestaltet sind, dass sie eine Federkraft auf den von dem jeweiligen Halteelement (82) aufgenommenen Längsschenkel (26) ausüben.

10. Magnetlagervorrichtung nach einem der Ansprüche 8-9, wobei jeder Längsschenkel (26) senkrecht zur axialen Richtung (A) einen rechteckigen Querschnitt hat, und wobei an jeder Ecke des Längsschenkels (26) genau einer der Stäbe (821) angeordnet ist.

11. Magnetlagervorrichtung nach einem der vorangehenden Anschlüsse, wobei die erste Halteeinrichtung (8) oder die zweite Halteeinrichtung (9) aus einem Kunststoff hergestellt sind.

12. Magnetlagervorrichtung nach einem der Ansprüche 2-11, wobei der Spalttopf (21) aus einem Kunststoff hergestellt ist.

13. Magnetlagervorrichtung nach einem der vorangehenden Ansprüche, wobei eine Kontrolleinheit (40) für die Ansteuerung und die Versorgung der Wicklungen (61a, 61b; 61) mit elektrischer Energie zur Erzeugung elektromagnetischer Felder vorgesehen ist.

14. Magnetlagervorrichtung nach einem der vorangehenden Ansprüche, wobei der Stator (2) zur Erzeugung eines Drehmoments ausgestaltet ist, mit welcher der Rotor (3) berührungslos magnetisch zur Rotation um die axiale Richtung (A) antreibbar ist.

15. Zentrifugalpumpe zum Fördern eines Fluids, **dadurch gekennzeichnet, dass** die Zentrifugalpumpe eine Magnetlagervorrichtung (1) gemäss Anspruch 14 umfasst, sowie einen Rotor (3) mit einem magnetisch wirksamen Kern (31), wobei der Rotor (3) in die becherförmige Ausnehmung (211) des Spalttopfes (21) einsetzbar ist, und wobei der Rotor (3) als Rotor (3) der Zentrifugalpumpe ausgestaltet ist.

## Claims

1. A magnetic levitation device for contactless magnetic levitation of a rotor (3) comprising a disk-shaped or ring-shaped magnetically effective core (31), wherein the magnetic levitation device has a stator (2) which comprises a plurality of coil cores (25), each of which comprises a longitudinal leg (26) extending from a first end (261) in an axial direction (A) to a second end (262), and a transverse leg (27) which is arranged at the second end (262) of the longitudinal leg and which extends in a radial direction perpendicular to the axial direction (A), wherein at least one concentrated winding (61a, 61b; 61) is provided at each longitudinal leg (26), which winding surrounds the respective longitudinal leg (26), wherein the stator (2) further has a cup-shaped recess (211) into which the rotor (3) can be inserted, wherein the cup-shaped recess (211) is arranged at an axial end of the stator (2), and wherein the transverse legs (27) are arranged around the cup-shaped recess (211), **characterized in that** a first holding device (8) and a second holding device (9) are provided, which can be connected to each other, wherein the first holding device (8) comprises a bottom plate (81) on which a plurality of holding elements (82) is provided, each of which extends in the axial direction (A) and each of which is designed to receive exactly one of the longitudinal legs (26), and wherein the second holding device (9) is designed to receive the transverse legs (27).

2. The magnetic levitation device according to claim 1, wherein the stator (2) has a containment can (21) which forms an axial end of the stator (2), and wherein the containment can (21) has the cup-shaped recess (211) into which the rotor (3) can be inserted.

3. The magnetic levitation device according to any one of the preceding claims, with a ring-shaped back iron (22) for conducting the magnetic flux, which connects the first ends (261) of all longitudinal legs (26), wherein the bottom plate (81) of the first holding device (8) is designed to receive the back iron (22), and wherein the back iron (22) is preferably arranged radially inwards at the first ends (261) of the longitudinal legs (26).

4. The magnetic levitation device according to any one of the preceding claims, in which a circuit board (7) with electronic components (71) is arranged with respect to the axial direction (A) between the windings (61a, 61b; 61) and the transverse legs (27), and wherein the second holding device (9) is designed to receive the circuit board (7).

5. The magnetic levitation device according to claim 4, in which the circuit board (7) is designed in a ring-shaped manner and arranged in such a way that the electronic components (71) are arranged around the cup-shaped recess (211).

6. The magnetic levitation device according to any one of the claims 2 to 5, in which the containment can (21) embraces the second holding device (9) radially outwardly.

7. The magnetic levitation device according to any one of the preceding claims, in which each holding element (82) of the first holding device (8) is arranged in each case with respect to the radial direction between one of the longitudinal legs (26) and the winding (61a, 61b; 61) arranged on this longitudinal leg (26), and extends with respect to the axial direction (A) at least to the end of all windings (61a, 61b; 61) which are arranged on the respective longitudinal leg (26).

8. The magnetic levitation device according to any one of the preceding claims, in which each holding element (82) comprises a plurality of rods (821) with empty spaces (822) located therebetween, wherein each rod (821) extends in the axial direction (A).

9. The magnetic levitation device according to claim 8, in which the rods (821) of the holding elements (82) are arranged and designed in such a way that they exert a spring force on the longitudinal leg (26) received by the respective holding element (82).

10. The magnetic levitation device according to any one of the claims 8 to 9, wherein each longitudinal leg (26) has a rectangular cross-section perpendicular to the axial direction (A), and wherein exactly one of the rods (821) is arranged at each corner of the longitudinal leg (26).

11. The magnetic levitation device according to any one of the preceding claims, wherein the first holding device (8) or the second holding device (9) are made of a plastic.

12. The magnetic levitation device according to any one of the claims 2 to 11, wherein the containment can (21) is made of a plastic.

13. The magnetic levitation device according to any one of the preceding claims, wherein a control unit (40) is provided for controlling and for supplying the windings (61a, 61b; 61) with electrical energy for generating electromagnetic fields.

14. The magnetic levitation device according to any one of the preceding claims, wherein the stator (2) is designed to generate a torque with which the rotor (3) can be driven magnetically without contact for rotation about the axial direction (A).

15. A centrifugal pump for conveying a fluid, **characterized in that** the centrifugal pump comprises a magnetic levitation device (1) according to claim 14, and a rotor (3) with a magnetically effective core (31), wherein the rotor (3) can be inserted into the cup-shaped recess (211) of the containment can (21), and wherein the rotor (3) is designed as the rotor (3) of the centrifugal pump.

## Revendications

1. Dispositif à lévitation magnétique pour la lévitation magnétique sans contact d'un rotor (3), qui comprend un noyau (31) magnétiquement actif en forme de disque ou annulaire, le dispositif à lévitation magnétique présentant un stator (2), qui comprend une pluralité de noyaux de bobine (25), dont chacun comprend une branche longitudinale (26), qui s'étend d'une première extrémité (261) dans une direction axiale (A) jusqu'à une deuxième extrémité (262), ainsi qu'une branche transversale (27), qui est disposée au niveau de la deuxième extrémité (262) de la branche longitudinale, et s'étend dans une direction radiale, qui est perpendiculaire à la direction axiale (A), au moins un enroulement concentré (61a, 61b ; 61) étant prévu au niveau de chaque branche longitudinale (26), lequel entoure la branche longitudinale (26) respective, le stator (2) présentant en outre un évidement en forme de godet (211), dans lequel le rotor (3) peut être inséré, l'évidement en forme de godet (211) étant disposé au niveau d'une extrémité axiale du stator (2), et les branches transversales (27) étant disposées autour de l'évidement en forme de godet (211), **caractérisé en ce qu'**un premier dispositif de retenue (8) et un deuxième dispositif de retenue (9) sont prévus, lesquels peuvent être connectés l'un à l'autre, le premier dispositif de retenue (8) comprenant une plaque de fond (81), sur laquelle une pluralité d'éléments de retenue (82) sont prévus, dont chacun s'étend dans la direction axiale (A), et dont chacun est configuré pour recevoir exactement l'une des branches longitudinales (26), et le deuxième dispositif de retenue (9) étant configuré pour recevoir les branches transversales (27).

2. Dispositif à lévitation magnétique selon la revendication 1, le stator (2) présentant une cloche de confinement (21), qui forme une extrémité axiale du stator (2), et la cloche de confinement (21) présentant l'évidement en forme de godet (211), dans lequel le rotor (3) peut être inséré.

3. Dispositif à lévitation magnétique selon l'une quelconque des revendications précédentes, comprenant un fer de retour annulaire (22) pour guider le flux magnétique, lequel relie les premières extrémités (261) de toutes les branches longitudinales (26), la plaque de fond (81) du premier dispositif de retenue (8) étant configurée pour recevoir le fer de retour (22), et le fer de retour (22) étant disposé de préférence radialement à l'intérieur au niveau des premières extrémités (261) des branches longitudinales (26).

4. Dispositif à lévitation magnétique selon l'une quelconque des revendications précédentes, dans lequel, par rapport à la direction axiale (A), une platine (7) avec des composants électroniques (71) est disposée entre les enroulements (61a, 61b ; 61) et les branches transversales (27), et le deuxième dispositif de retenue (9) étant configuré pour recevoir la platine (7).

5. Dispositif à lévitation magnétique selon la revendication 4, dans lequel la platine (7) est configurée sous forme annulaire et est disposée de telle sorte que les composants électroniques (71) soient disposés autour de l'évidement en forme de godet (211).

6. Dispositif à lévitation magnétique selon l'une quelconque des revendications 2 à 5, dans lequel la cloche de confinement (21) comprend le deuxième dispositif de retenue (9) radialement à l'extérieur.

7. Dispositif à lévitation magnétique selon l'une quelconque des revendications précédentes, dans lequel chaque élément de retenue (82) du premier dispositif de retenue (8) est disposé par rapport à la direction radiale à chaque fois entre l'une des branches longitudinales (26) et l'enroulement (61a, 61b ; 61) disposé sur cette branche longitudinale (26), et s'étend par rapport à la direction axiale (A) au moins jusqu'à l'extrémité de tous les enroulements (61a, 61b ; 61), qui sont disposés sur la branche longitudinale (26) respective.

8. Dispositif à lévitation magnétique selon l'une quelconque des revendications précédentes, dans lequel chaque élément de retenue (82) comprend une pluralité de barres (821) avec des espaces vides (822) situés entre elles, chaque barre (821) s'étendant dans la direction axiale (A).

9. Dispositif à lévitation magnétique selon la revendication 8, dans lequel les barres (821) des éléments de retenue (82) sont disposées et configurées de telle sorte qu'elles exercent une force de ressort sur la branche longitudinale (26) reçue par l'élément de retenue (82) respectif.

10. Dispositif à lévitation magnétique selon l'une quelconque des revendications 8 à 9, dans lequel chaque branche longitudinale (26) présente perpendiculairement à la direction axiale (A) une section transversale rectangulaire, et exactement l'une des barres (821) étant disposée au niveau de chaque angle de la branche longitudinale (26).

11. Dispositif à lévitation magnétique selon l'une quelconque des revendications précédentes, dans lequel le premier dispositif de retenue (8) ou le deuxième dispositif de retenue (9) sont fabriqués à partir d'une matière plastique.

12. Dispositif à lévitation magnétique selon l'une quelconque des revendications 2 à 11, dans lequel la cloche de confinement (21) est fabriquée à partir d'une matière plastique.

13. Dispositif à lévitation magnétique selon l'une quelconque des revendications précédentes, dans lequel une unité de commande (40) est prévue pour la commande et l'alimentation des enroulements (61a, 61b ; 61) avec de l'énergie électrique pour la génération de champs électromagnétiques.

14. Dispositif à lévitation magnétique selon l'une quelconque des revendications précédentes, dans lequel le stator (2) est configuré pour la génération d'un couple, avec lequel le rotor (3) peut être entraîné magnétiquement sans contact pour la rotation autour de la direction axiale (A).

15. Pompe centrifuge pour le transport d'un fluide, **caractérisée en ce que** la pompe centrifuge comprend un dispositif à lévitation magnétique (1) selon la revendication 14, ainsi qu'un rotor (3) avec un noyau magnétiquement actif (31), le rotor (3) pouvant être inséré dans l'évidement en forme de godet (211) de la cloche de confinement (21), et le rotor (3) étant configuré en tant que rotor (3) de la pompe centrifuge.
